# EUROPEAN PATENT APPLICATION

(11) **EP 2 336 836 A1**
(43) Date of publication of application: **22.06.2011**
(21) Application number: 10192737.4
(22) Date of filing: 26.11.2010
(51) Int. Cl.: G05B 15/02, F24J 2/06, F24J 2/40

(54) **Method, system, and controller for controlling heliostat mirrors**

(30) Priority: 08.12.2009 US 633512
(71) Applicant: GE Intelligent Platforms, Inc., Charlottesville, VA 22911 (US)
(72) Inventor: Miller, Daniel H., Charlottesville, VA 22911 (US)
(74) Representative: Illingworth-Law, William Illingworth

(57) **Abstract**

A distributed heliostat control system (102) includes a central controller (104) configured to calculate a plurality of coefficients for use in positioning at least one mirror (112) with respect to a plurality of positions of the sun, and at least one local controller (106) coupled to the central controller via a network (114), the at least one local controller further coupled to at least one actuator (110) that is configured to move the at least one mirror with respect to at least one axis. The at least one local controller is configured to receive the plurality of coefficients from the central controller via the network, calculate a plurality of positions of the at least one mirror based on the plurality of coefficients and corresponding to the plurality of positions of the sun, and cause the at least one actuator to move the at least one mirror with respect to the at least one axis to each of the plurality of calculated positions.

## Description

### BACKGROUND

The embodiments described herein relate generally to distributed control systems and, more particularly, to distributed control systems for use in solar power generation systems.

At least some known systems for controlling heliostat mirrors include a controller that is coupled to a plurality of cameras that produce images of sunlight reflected from multiple heliostats. The images are used by the controller to estimate heliostat parameters for use in controlling the heliostat mirrors.

Moreover, at least some known heliostats execute an autonomous control function that uses light reflected from a mirror towards a target sensor to determine adjustments that are necessary to a position of the mirror.

### BRIEF DESCRIPTION

In one aspect, a method is provided for controlling at least one mirror in a solar power generation system. The method includes using a central controller to calculate at least one coefficient based on at least one of a daily cycle and a yearly cycle of the sun, and storing the coefficient in a memory area of the central controller. The method also includes transmitting the coefficient, by the central controller, to at least one local controller via a network such that, in response to receiving the coefficient, the local controller calculates at least one position for the mirror based on the coefficient and an internal clock, and controls movement of the mirror to the position using an actuator.

In another aspect, a distributed heliostat control system is provided, including a central controller configured to calculate a plurality of coefficients for use in positioning at least one mirror with respect to a plurality of positions of the sun. The system also includes at least one local controller coupled to the central controller via a network, wherein the local controller is further coupled to at least one actuator that is configured to move the at least one mirror with respect to at least one axis. The local controller is configured to receive the coefficients from the central controller via the network, calculate a plurality of positions of the mirror based on the coefficients and corresponding to the positions of the sun, and cause the actuator to move the mirror with respect to the axis to each of the calculated positions.

In another aspect, a controller is provided for use in a solar power generation system that includes a plurality of local controllers configured to control movement of a plurality of mirrors. The controller includes a memory area configured to store a plurality of coefficients for use in positioning the mirrors with respect to a position of the sun. The controller also includes a processor coupled to the memory area and configured to calculate the coefficients based on the position of the sun and a respective location of each of the mirrors. The processor is also configured to transmit a plurality of subsets of the coefficients to each of a plurality of local controllers via a network, wherein each of the subsets corresponds to at least one mirror of the plurality of mirrors.

### BRIEF DESCRIPTION OF THE DRAWINGS

The embodiments described herein may be better understood by referring to the following description in conjunction with the accompanying drawings.

FIG. 1 is a schematic block diagram of an exemplary solar power generation system.

FIG. 2 is a schematic block diagram of an exemplary heliostat control system that may be used with the solar power generation system shown in FIG. 1.

FIG. 3 is a flowchart illustrating an exemplary method for controlling a plurality of mirrors using the heliostat control system shown in FIG. 2.

### DETAILED DESCRIPTION

In some embodiments, the term "controller" refers generally to any device or apparatus for use in a computing environment including a server, a workstation, a personal computer, a laptop computer, a dedicated controller such as a programmable automation controller (PAC) or a programmable logic controller (PLC), or any other suitable device or apparatus. The above examples are exemplary only, and thus are not intended to limit in any way the definition and/or meaning of the term "controller."

In some embodiments, the term "actuator" refers generally to any mechanical device for use in moving and/or controlling a mechanism or apparatus, including pneumatic actuators, electric actuators, motors, hydraulic cylinders, and linear actuators. The above examples are exemplary only, and thus are not intended to limit in any way the definition and/or meaning of the term "actuator."

In some embodiments, the term "network" refers generally to any medium for telecommunication including optical fiber, Ethernet, wireless (e.g., IEEE 802.11), phoneline (e.g., HomePNA®) (HomePNA® is a registered trademark of HomePNA, Inc. of San Ramon, California), power line communication, and any other medium or protocol capable of facilitating the communications described herein. The above examples are exemplary only, and thus are not intended to limit in any way the definition and/or meaning of the term "network."

In some embodiments, the term "processor" refers generally to any programmable system including systems and microcontrollers, reduced instruction set circuits (RISC), application specific integrated circuits (ASIC), programmable logic circuits, and any other circuit or processor capable of executing the functions described herein. The above examples are exemplary only, and thus are not intended to limit in any way the definition and/or meaning of the term "processor."

In some embodiments, the term "memory area" refers generally to any computer data storage medium including random access memory (RAM) modules, read only memory (ROM) modules, disk-based hard drives, solid state hard drives, databases, and any other device or apparatus capable of storing the information described herein. The above examples are exemplary only, and thus are not intended to limit in any way the definition and/or meaning of the term "memory area."

In some embodiments, the term "coefficient" refers generally to any constant multiplicative factor of a specific object, such as a variable, a vector, or a function, that is used to determine one or more positions of a mirror based on one or more known positions of the sun and/or a location of the mirror. An exemplary expression that includes one or more coefficients is a polynomial expression of one or more variables. The above examples are exemplary only, and thus are not intended to limit in any way the definition and/or meaning of the term "coefficient."

Described in detail herein are exemplary embodiments of methods, systems, and apparatus that facilitate more efficiently controlling a field of mirrors using a central controller and a plurality of simplified local controllers. A distributed system architecture that includes a central controller having control over the local controllers facilitates lowering installation and service costs, and also facilitates providing calibration functions from a single, centrally-located controller to reduce inaccuracies in mirror placement and control.

Exemplary technical effects of the embodiments described herein include at least one of: (a) coupling one or more mirrors to one of a plurality of actuators; (b) coupling one or more actuators to one of a plurality of local controllers; (c) coupling the local controllers to a central controller via a network; (d) storing, in a memory area of the central controller, identification information related to each of the mirrors, actuators, and/or local controllers, and storing associative information related to identifying mirrors coupled to a given actuator and/or identifying actuators coupled to a given local controller; (e) storing sun tracking information in the memory area of the central controller; (f) using the central controller to calculate a plurality of coefficients based on the sun tracking data and for use in controlling movement of the mirrors; (g) transmitting a respective subset of the coefficients to each local controller based on an identity of the mirrors controlled by each local controller; (h) using the local controllers to calculate a plurality of positions for each respective mirror based on the coefficients; and (i) using the local controllers to control movement of the mirrors to each of the calculated positions by respective actuators, wherein each mirror either reflects solar energy to a desired collection point for use in generating electrical energy or transforms the solar energy into electrical energy.

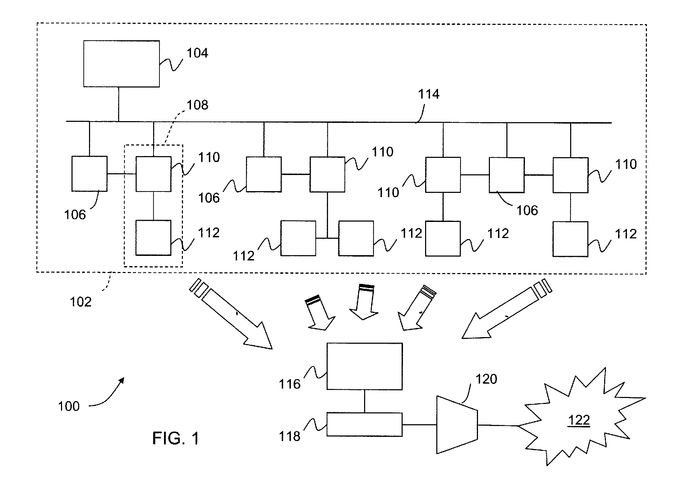

FIG. 1 is a schematic block diagram of an exemplary solar power generation system 100 that includes a distributed heliostat control system 102. In the exemplary embodiment, control system 102 includes a central controller 104, a plurality of local controllers 106, and a plurality of heliostats 108. Each heliostat 108 includes an actuator 110 and one or more mirrors 112 coupled to actuator 110. Each local controller 106 is also coupled to one or more actuators 110. In the exemplary embodiment, central controller 104, local controllers 106, and actuators 110 are coupled via a network 114 to facilitate controlling movement of mirrors 112 according to movement of the sun, including daily cycles and yearly cycles of the sun.

In the exemplary embodiment, generation system 100 also includes a collector 116 that includes a medium such as, but not limited to, water or molten salt. Collector 116 is coupled in fluid communication with a heat exchanger 118, which is coupled in fluid communication with a turbine 120, such as a steam turbine. Mirrors 112 focus the sun's energy onto collector 116, which heats the medium. The medium is channeled through heat exchanger 118 to heat water and produce steam. The steam drives turbine 120, which generates electricity for distribution via a distribution network 122. In an alternative embodiment, turbine 120 is coupled directly to a load (not shown).

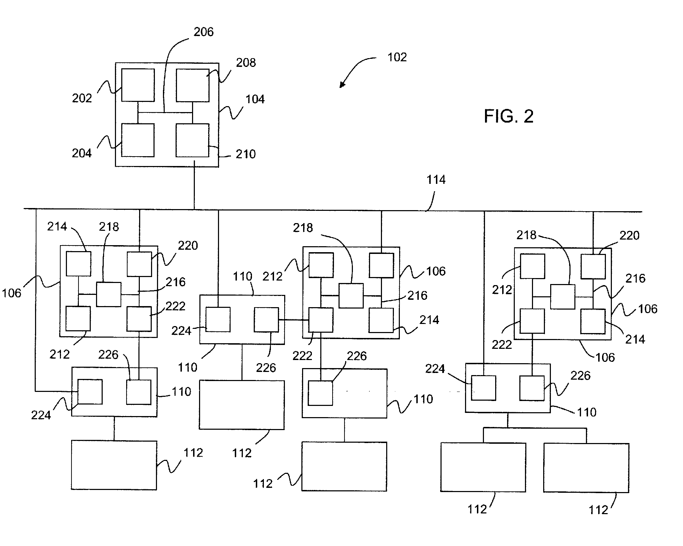

FIG. 2 is a schematic block diagram of control system 102. In the exemplary embodiment, central controller 104 includes a processor 202 and a memory area 204 coupled via a system bus 206. Processor 202 calculates one or more coefficients based on known daily and yearly cycles of the sun and for use in controlling mirrors 112 to optimize tracking the sun. Memory area 204 stores information such as, but not limited to, data representative of the known daily and yearly cycles of the sun. Moreover, memory area 204 stores tracking information for local controllers 106, actuators 110, and/or mirrors 112. For example, memory area 204 stores a unique identifier, such as a network address, for each local controller 106 and each actuator 110 to facilitate communicating with only desired local controllers 106 and/or actuators 110. As another example, memory area 204 stores a unique identifier and/or location for each mirror 112. The coefficients are based, at least partially, on the location of each mirror 112. Memory area 204 also stores associations between local controllers 106, actuators 110, and mirrors 112. For example, memory area 204 stores associations that enable tracking to which actuator 110 each mirror 112 is coupled and/or to which local controller 106 each actuator 110 is coupled. It should be understood that central controller 104 may include multiple processors 202 and/or multiple memory areas 204.

Moreover, in the exemplary embodiment, central controller 104 includes an internal clock 208. Internal clock 208 may be a software-controlled clock that is executed, such as continually executed or periodically executed, by processor 202. Alternatively, internal clock 208 may be a hardware-controlled clock that synchronizes with an external source, such as a global positioning system (GPS) satellite network (not shown). In the exemplary embodiment, central controller 104 also includes a network interface 210 that couples central controller 104 to network 114. Processor 202 transmits the plurality of coefficients to local controllers 106 via network interface 210 and network 114. In the exemplary embodiment, central controller 104 is embodied in a single computer or server. However, in alternative embodiments, central controller 104 may be embodied in a clustered configuration, replicated configuration, or any other suitable configuration.

In the exemplary embodiment, each local controller 106 includes an electrical architecture substantially similar to that of central controller 104. Specifically, each local controller 106 includes a processor 212 and a memory area 214 coupled via a system bus 216. Processor 212 calculates one or more positions to which each associated mirror 112 should be moved by a corresponding actuator 110. Memory area 214 stores each position along with an identifier for the corresponding mirror 112 and/or actuator 110. It should be understood that each local controller 106 may include multiple processors 212 and/or multiple memory areas 214. Moreover, in the exemplary embodiment, each local controller 106 includes an internal clock 218, which is configured to synchronize with internal clock 208 as described in more detail below. Each local controller 106 also includes a network interface 220 that couples local controller 106 to network 114. Moreover, each local controller 106 includes an actuator interface 222 that couples local controller 106 to one or more actuators 110. Actuator interface 222 may be a serial interface such as, but not limited to, an RS-232 interface, an RS-423 interface, or an RS-485 interface. In an alternative embodiment, actuator interface 222 may be a network interface that facilitates communications between local controller 106 and actuator 110 via network 114. In another alternative embodiment, local controller 106 and actuator 110 are directly coupled without the use of a network or a specific protocol.

In some embodiments, actuator 110 includes a network interface 224 that couples actuator 110 to network 114. In the exemplary embodiment, each actuator 110 includes a local controller interface 226 that couples actuator 110 to local controller 106. Similar to actuator interface, local controller interface 226 may be a serial interface such as, but not limited to, an RS-232 interface, an RS-423 interface, or an RS-485 interface. Alternatively, local controller interface 226 may be a network interface that facilitates communications between actuator 110 and local controller 106 via network 114. In the exemplary embodiment, each actuator 110 is coupled to one or more mirrors 112 and configured to move each mirror 112 along and/or about one or more axes.

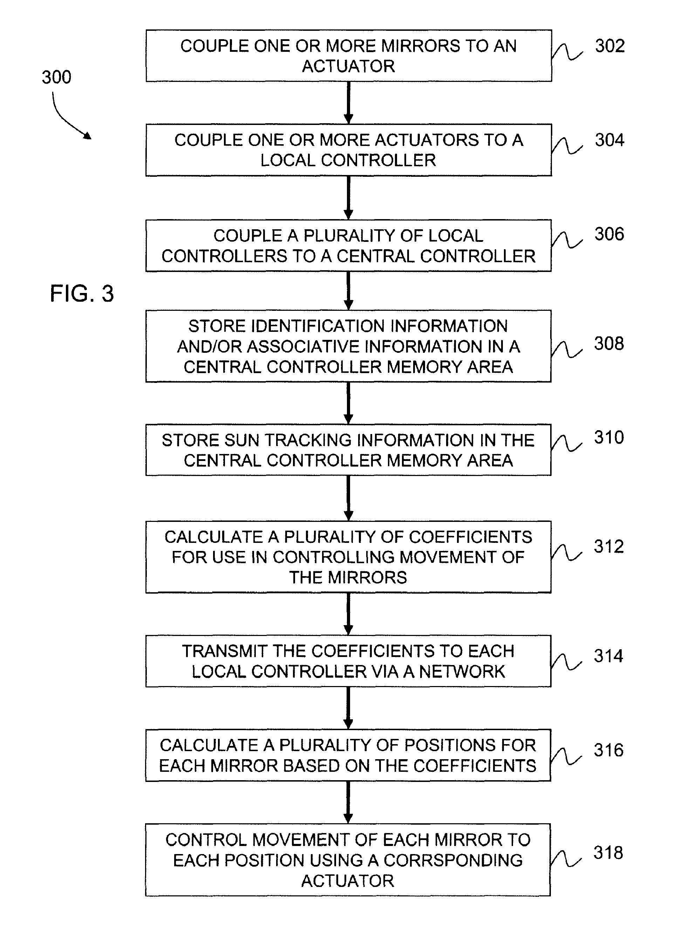

FIG. 3 is a flowchart 300 illustrating an exemplary method for controlling one or more mirrors, such as one or more mirrors 112, using a distributed heliostat control system, such as control system 102 (both shown in FIG. 2).

In the exemplary embodiment, one or more mirrors 112 are coupled 302 to each actuator 110 (shown in FIG. 2). Each mirror 112 is coupled to actuator 110 to facilitate translational and/or rotational movement along and/or about one or more axes according to daily and/or yearly cycles of the sun. One or more actuators 110 are then coupled 304 to each local controller 106 (shown in FIG. 2). In some embodiments, actuator 110 and local controller 106 are each coupled to network 114 (shown in FIG. 2). Alternatively, actuator 110 is coupled to local controller 106 using a serial connection.

In the exemplary embodiment, each local controller 106 is coupled 306 to central controller 104 (shown in FIG. 2) via network 114. Identification information and/or associative tracking information is then stored 308 in memory area 204 (shown in FIG. 2). Identification information includes, but is not limited to, a unique identifier of each local controller 106, each actuator 110, and each mirror 112. Tracking information includes, but is not limited to, an association between each actuator 110 and one or more mirrors 112 coupled thereto, and/or each local controller 106 and one or more actuators 110 coupled thereto. Sun tracking information is then stored 310 in memory area 204. Sun tracking information includes, but is not limited to, a plurality of positions of the sun based on known daily and/or yearly cycles of the sun.

In the exemplary embodiment, central controller 104 calculates 312 one or more coefficients for use in controlling movement of mirrors 112 based on the stored sun tracking information and a stored location of each mirror 112. More specifically, processor 202 (shown in FIG. 2) calculates the coefficients for each mirror 112 based on the stored sun tracking information and the location of each mirror 112 stored in memory area 204. Moreover, processor 202 calculates the coefficients for use during a predefined time period, such as during daylight hours during which suitable sunlight is available to collect solar energy. Due to the natural variations in lengths of days due to the daily and yearly cycles of the sun, the predefined time period may differ from one time period to the next. In the exemplary embodiment, processor 202 calculates the coefficients during a first time period, such as a first set of daylight hours when generation system 100 (shown in FIG. 1) is generating power. Central controller 104 then stores the coefficients in memory area 204. More specifically, processor 202 stores a subset of coefficients in memory area 204 for each mirror 112.

In the exemplary embodiment, central controller 104 transmits 314 the coefficients to each local controller 106 via network 114. More specifically, processor 202 determines a unique identifier, such as a network address, for each local controller 106, and determines which mirrors 112 are controlled by each local controller 106. Processor 202 then transmits a respective subset of coefficients associated with each mirror 112 to an associated local controller 106. In the exemplary embodiment, processor 202 transmits the coefficients during a second time period that follows the first time period, such as during nighttime hours when generation system 100 is not generating power or when local controllers 106 would otherwise be idle.

Each local controller 106 receives one or more subsets of coefficients and stores each subset of coefficients in memory area 214 (shown in FIG. 2). Each local controller 106 then calculates 316 one or more positions for each corresponding mirror 112 and stores the positions for each corresponding mirror 112 in memory area 214. More specifically, for each local controller 106, processor 212 (shown in FIG. 2) receives one or more subsets of coefficients and an identifier that associates each subset with a corresponding mirror 112. Processor 212 stores the coefficients in memory area 214. Based on the stored coefficient subsets, processor 212 calculates the positions required for each corresponding mirror 112 that optimizes an angle of incidence of sunlight onto a mirror surface (not shown) to reflect a maximum amount of solar energy towards collector 116 (shown in FIG. 1). In the exemplary embodiment, processor 212 calculates the positions during a third time period that follows the second time period, such as during a second set of daylight hours.

Each local controller 106 then controls 318 movement of each associated mirror 112 to each of the stored positions using corresponding actuators 110. More specifically, processor 212 retrieves each stored position for each associated mirror 112 and causes a corresponding actuator 110 to control movement of mirror 112 along and/or about one or more axes to reach the stored position.

In some embodiments, each local controller 106 controls actuator 110 such that actuator 110 maneuvers mirror 112 into a stow position. Specifically, in some embodiments, central controller 104 detects an environmental condition, such as a wind event, and transmits a stow command to each local controller 106. Central controller 104 may transmit the stow command to each local controller 106 or to select local controllers 106 based on, for example, a location of a respective mirror 112.

In some embodiments, central controller 104 transmits a time synchronization signal to each local controller 106. More specifically, internal clock 208 (shown in FIG. 2) determines a current time, and processor 202 transmits a time synchronization signal to one or more local controllers 106 via network 114. In response to receiving the time synchronization signal, each local controller 106 resets, or synchronizes, internal clock 218 (shown in FIG. 2). Central controller 104 may transmit the time synchronization signal to all local controllers 106 or to select local controllers 106.

Moreover, in some embodiments, central controller 104 assumes control of one or more actuators 110 from corresponding local controllers 106. Central controller 104 may communication directly with actuator 110 when actuator 110 is coupled to network 114 via network interface 224 (shown in FIG. 2). Alternatively, central controller 104 may communicate with actuator 110 via local controller 106. In such embodiments, central controller 104 executes a calibration process to ensure positional accuracy of mirror 112 and/or positional accuracy of actuator 110.

Exemplary embodiments of methods, systems, and apparatus for use in controlling mirror positions in a solar power generation system are described above in detail. The methods, systems, and apparatus are not limited to the specific embodiments described herein but, rather, operations of the methods and/or components of the systems and apparatus may be utilized independently and separately from other operations and/or components described herein. Further, the described operations and/or components may also be defined in, or used in combination with, other methods, systems, and/or apparatus, and are not limited to practice with only the methods, systems, and apparatus as described herein.

A controller, such as those described herein, includes at least one processor or processing unit and a system memory. The controller typically has at least some form of computer readable media. By way of example and not limitation, computer readable media include computer storage media and communication media. Computer storage media include volatile and nonvolatile, removable and non-removable media implemented in any method or technology for storage of information such as computer readable instructions, data structures, program modules, or other data. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Combinations of any of the above are also included within the scope of computer readable media.

Although the present invention is described in connection with an exemplary distributed heliostat control system environment, embodiments of the invention are operational with numerous other general purpose or special purpose control system environments or configurations. The distributed heliostat control system environment is not intended to suggest any limitation as to the scope of use or functionality of any aspect of the invention. Moreover, the distributed heliostat control system environment should not be interpreted as having any dependency or requirement relating to any one or combination of components illustrated in the exemplary operating environment. Examples of well known distributed heliostat control systems, environments, and/or configurations that may be suitable for use with the embodiments described herein include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments may be described in the general context of computer-executable instructions, such as program components or modules, executed by one or more computers or other devices. Aspects of the invention may be implemented with any number and organization of components or modules. For example, embodiments are not limited to the specific computer-executable instructions or the specific components or modules illustrated in the figures and described herein. Alternative embodiments may include different computer-executable instructions or components having more or less functionality than illustrated and described herein.

The order of execution or performance of the operations in the embodiments illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the described embodiments.

When introducing elements of aspects of the invention or embodiments thereof, the articles "a," "an," "the," and "said" are intended to mean that there are one or more of the elements. The terms "comprising," including," and "having" are intended to be inclusive and mean that there may be additional elements other than the listed elements.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects of the present invention are defined in the following numbered clauses:
1. A method for controlling at least one mirror in a solar power generation system, said method comprising:
   using a central controller to calculate at least one coefficient based on at least one of a daily cycle and a yearly cycle of the sun;
   storing the at least one coefficient in a memory area of the central controller; and
   transmitting the at least one coefficient, by the central controller, to at least one local controller via a network such that, in response to receiving the at least one coefficient, the at least one local controller calculates at least one position for the at least one mirror based on the at least one coefficient and an internal clock, and controls movement of the at least one mirror to the at least one position using an actuator.
2. A method in accordance with Clause 1, wherein:
   using a central controller to calculate at least one coefficient comprises calculating the at least one coefficient further based on a location of the at least one mirror; and
   storing the at least one coefficient in a memory area comprises storing a plurality of coefficients corresponding to the at least one mirror.
3. A method in accordance with Clause 1 or Clause 2, further comprising transmitting a time synchronization signal, by the central controller, to the at least one local controller such that the at least one local controller synchronizes the internal clock responsive to receiving the synchronization signal.
4. A method in accordance with any preceding Clause, further comprising using the central controller to perform a calibration process on the at least one mirror.
5. A distributed heliostat control system comprising:
   a central controller configured to calculate a plurality of coefficients for use in positioning at least one mirror with respect to a plurality of positions of the sun; and
   at least one local controller coupled to said central controller via a network, said at least one local controller further coupled to at least one actuator that is configured to move the at least one mirror with respect to at least one axis, said at least one local controller configured to:
      receive the plurality of coefficients from said central controller via said network;
      calculate a plurality of positions of the at least one mirror based on the plurality of coefficients and corresponding to the plurality of positions of the sun; and
      cause said at least one actuator to move the at least one mirror with respect to the at least one axis to each of the plurality of calculated positions.
6. A distributed heliostat control system in accordance with Clause 5, wherein said central controller is configured to:
   calculate the plurality of coefficients during a first time period; and
   transmit the plurality of coefficients during a second time period that is different than the first time period.
7. A distributed heliostat control system in accordance with Clause 6, wherein said at least one local controller is configured to:
   receive the plurality of coefficients during the second time period; and
   calculate the plurality of positions of the at least one mirror and cause said at least one actuator to move the at least one mirror during a third time period that is different than the first time period and the second time period.
8. A distributed heliostat control system in accordance with any of Clauses 5 to 7, wherein said at least one local controller is configured to calculate the plurality of positions of the at least one mirror based on an internal clock.
9. A distributed heliostat control system in accordance with Clause 8, wherein said central controller is further configured to transmit a time synchronization signal to said at least one local controller, and said at least one local controller is further configured to synchronize the internal clock based on the time synchronization signal.
10. A distributed heliostat control system in accordance with any of Clauses 5 to 9, wherein said at least one local controller is further configured to cause said at least one actuator to move the at least one mirror into a stow position.
11. A distributed heliostat control system in accordance with Clause 10, wherein said central controller is further configured to detect an environmental condition and to transmit a stow command to said at least one local controller via said network.
12. A distributed heliostat control system in accordance with any of Clauses 5 to 11, wherein said central controller is further configured to assume control of said at least one actuator and to perform a calibration process using said at least one actuator and the at least one mirror.
13. A distributed heliostat control system in accordance with any of Clauses 5 to 12, wherein said at least one local controller comprises a plurality of local controllers, each local controller of said plurality of local controllers is coupled to a respective plurality of actuators for controlling a respective mirror.
14. A controller for use in a solar power generation system that includes a plurality of local controllers configured to control movement of a plurality of mirrors, said controller comprising:
   a memory area configured to store a plurality of coefficients for use in positioning the plurality of mirrors with respect to a position of the sun; and
   a processor coupled to said memory area, said processor configured to:
      calculate the plurality of coefficients based on the position of the sun and a respective location of each mirror of the plurality of mirrors; and
      transmit a plurality of subsets of the plurality of coefficients to each local controller of a plurality of local controllers via a network, each subset of the plurality of subsets corresponding to at least one mirror of the plurality of mirrors.
15. A controller in accordance with Clause 14, wherein said memory area is further configured to store an address for each local controller.
16. A controller in accordance with Clause 14 or Clause 15, wherein said memory area is further configured to store an identifier and the location of each mirror.
17. A controller in accordance with any of Clauses 14 to 16, wherein said memory area is further configured to store an identifier of at least one mirror of the plurality of mirrors that is controlled by each of the local controller.
18. A controller in accordance with any of Clauses 14 to 17, wherein said processor is further configured to detect an environmental condition and to transmit a stow command to at least one local controller of the plurality of local controllers for use in stowing an associated mirror of the plurality of mirrors.
19. A controller in accordance with any of Clauses 14 to 18, wherein said processor is further configured to transmit a time synchronization signal to at least one local controller of the plurality of local controllers for use in synchronizing an internal clock of the at least one local controller.
20. A controller in accordance with any of Clauses 14 to 19, wherein said processor is further configured to perform a calibration process on at least one mirror of the plurality of mirrors.

## Claims

1. A distributed heliostat control system (102) comprising:
a central controller (104) configured to calculate a plurality of coefficients for use in positioning at least one mirror (112) with respect to a plurality of positions of the sun; and
at least one local controller (106) coupled to said central controller via a network (114), said at least one local controller further coupled to at least one actuator (110) that is configured to move the at least one mirror with respect to at least one axis, said at least one local controller configured to:
receive the plurality of coefficients from said central controller via said network;
calculate a plurality of positions of the at least one mirror based on the plurality of coefficients and corresponding to the plurality of positions of the sun; and
cause said at least one actuator to move the at least one mirror with respect to the at least one axis to each of the plurality of calculated positions.

2. A distributed heliostat control system (102) in accordance with Claim 1, wherein said central controller (104) is configured to:
calculate the plurality of coefficients during a first time period; and
transmit the plurality of coefficients during a second time period that is different than the first time period.

3. A distributed heliostat control system (102) in accordance with Claim 2, wherein said at least one local controller (106) is configured to:
receive the plurality of coefficients during the second time period; and
calculate the plurality of positions of the at least one mirror (112) and cause said at least one actuator (110) to move the at least one mirror during a third time period that is different than the first time period and the second time period.

4. A distributed heliostat control system (102) in accordance with any preceding Claim, wherein said at least one local controller (106) is configured to calculate the plurality of positions of the at least one mirror (112) based on an internal clock (208).

5. A distributed heliostat control system (102) in accordance with Claim 4, wherein said central controller (104) is further configured to transmit a time synchronization signal to said at least one local controller (106), and said at least one local controller is further configured to synchronize the internal clock (208) based on the time synchronization signal.

6. A distributed heliostat control system (102) in accordance with any preceding Claim, wherein said at least one local controller (106) is further configured to cause said at least one actuator (110) to move the at least one mirror (112) into a stow position.

7. A distributed heliostat control system (102) in accordance with Claim 6, wherein said central controller (104) is further configured to detect an environmental condition and to transmit a stow command to said at least one local controller (106) via said network (114).

8. A distributed heliostat control system (102) in accordance with any preceding Claim, wherein said central controller (104) is further configured to assume control of said at least one actuator (110) and to perform a calibration process using said at least one actuator and the at least one mirror (112).

9. A distributed heliostat control system (102) in accordance with any preceding Claim, wherein said at least one local controller (106) comprises a plurality of local controllers, each local controller of said plurality of local controllers is coupled to a respective plurality of actuators (110) for controlling a respective mirror (112).

10. A controller for use in a solar power generation system (100) that includes a plurality of local controllers (106) configured to control movement of a plurality of mirrors (112), said controller comprising:
a memory area (204) configured to store a plurality of coefficients for use in positioning the plurality of mirrors with respect to a position of the sun; and
a processor (212) coupled to said memory area, said processor configured to:
calculate the plurality of coefficients based on the position of the sun and a respective location of each mirror of the plurality of mirrors; and
transmit a plurality of subsets of the plurality of coefficients to each local controller of a plurality of local controllers via a network (114), each subset of the plurality of subsets corresponding to at least one mirror of the plurality of mirrors.

11. A method for controlling at least one mirror in a solar power generation system, said method comprising:
using a central controller to calculate at least one coefficient based on at least one of a daily cycle and a yearly cycle of the sun;
storing the at least one coefficient in a memory area of the central controller; and
transmitting the at least one coefficient, by the central controller, to at least one local controller via a network such that, in response to receiving the at least one coefficient, the at least one local controller calculates at least one position for the at least one mirror based on the at least one coefficient and an internal clock, and controls movement of the at least one mirror to the at least one position using an actuator.

12. A method in accordance with Claim 11, wherein:
using a central controller to calculate at least one coefficient comprises calculating the at least one coefficient further based on a location of the at least one mirror; and
storing the at least one coefficient in a memory area comprises storing a plurality of coefficients corresponding to the at least one mirror.

13. A method in accordance with Claim 11 or Claim 12, further comprising transmitting a time synchronization signal, by the central controller, to the at least one local controller such that the at least one local controller synchronizes the internal clock responsive to receiving the synchronization signal.

14. A method in accordance with any of Claims 11 to 13, further comprising using the central controller to perform a calibration process on the at least one mirror.
